# FASCICULE DE BREVET EUROPEEN

(11) **EP 0 381 553 B1**
(45) Date de publication et mention de la délivrance du brevet: **24.03.1993**
(21) Numéro de dépôt: 90400186.4
(22) Date de dépôt: 23.01.1990
(51) Int. Cl.: A63K 3/00, A01K 15/02

(54) **Dispositif de surveillance de l'allure notamment d'un cheval et système de surveillance en comportant application**
Vorrichtung zum Überwachen des Ganges, insbesondere eines Pferdes, und mit einer solchen Vorrichtung vorsehene Überwachungseinrichtung
Monitoring device for the gait of a horse in particular, and monitoring system using such a device

(30) Priorité: 31.01.1989 FR 8901192
(43) Date de publication de la demande: 08.08.1990
(73) Titulaire: P.O. INGENIERIE, 83503 La Seyne S/Mer (FR)
(72) Inventeur: Abraham, Raymond, F-76320 Caudebec-Les-Elboeuf (FR); Blottiere, Albert, 27270 Broglie (FR); Moreau, Jean Pierre, 83190 Ollioules (FR); Rubben, Benoît, F-83140 Six Fours Les Plages (FR); Tanquerel, Claude, F-76580 Le Trait (FR)
(74) Mandataire: Polus, Camille

(56) Documents cités:
- US-A- 3 795 907
- US-A- 3 999 611
- US-A- 4 190 968

## Description

La présente invention concerne un dispositif de surveillance de l'allure notamment d'un cheval et un système de surveillance par exemple de chevaux lors d'une course, en comportant application.

Les courses en peloton et notamment les courses de trot sont extrêmement difficiles à surveiller, de sorte que des erreurs de jugement concernant les mises à la faute des chevaux peuvent être commises.

En effet, il est extrêmement difficile aux commissaires de coursa de pouvoir suivre en même temps plusieurs chevaux et déterminer avec certitude qu'un cheval s'est mis à la faute ou non, dans la mesure où ils ne disposent d'aucun moyen complétement fiable permettant de confirmer leur décision. Il existe bien entendu des systèmes de télévison en circuit fermé comportant des caméras, des récepteurs de télévision et des magnétoscopes, permettant aux commissaires de surveiller certains chevaux.

Cependant, ces systèmes ne sont pas d'une fiabilité absolue dans la mesure où les chevaux peuvent se mettre à la faute en dehors du champ des caméras.

Par ailleurs, on connait également dans l'état de la technique des systèmes de détermination des mouvements d'un cheval.

Ainsi par exemple, il existe des systèmes comportant des accéléromètres ou des centrales inertielles d'acquisition de paramètres de déplacement d'un cheval, ces systèmes ayant été par exemple développés dans le cadre de la réalisation d'un simulateur équestre et de la création de banques de données de mouvements d'un certain nombre de chevaux selectionnés.

On connaît également dans l'état de la technique par le document US-A-3 999 611, un dispositif de surveillance de l'allure d'un cheval, qui comporte une première unité portée par le cheval et dans laquelle sont prévus des moyens de mesure de paramètres de déplacement du cheval suivant au moins un axe, des moyens de traitement des signaux issus de ces moyens de mesure, des moyens d'alimentation en énergie électrique des circuits de cette première unité et des moyens d'émission d'informations vers des moyens de réception de ces informations prévus dans une seconde unité, séparée de la première et dans laquelle sont disposés des moyens d'enregistrement de ces informations.

Ainsi que cela est indiqué dans ce document, l'enregistrement de ces informations pour un animal déterminé, par exemple tous les mois, permet d'obtenir une banque de données et de déterminer par comparaison à postériori de ces informations, les variations de performance ou les fautes d'allure de l'animal.

Cependant, le dispositif décrit dans ce document ne permet en aucun cas de résoudre le problème posé pour la surveillance instantanée de l'allure d'un cheval, par exemple lors d'une course.

Le but de l'invention est donc de résoudre les problèmes évoqués précédemment au sujet des courses de chevaux en proposant un dispositif et un système de surveillance de l'allure notamment de chevaux lors d'une course, qui soient fiables, simples, d'un prix de revient peu élevé et qui constituent un système d'aide à la décision des commissaires de course.

A cet effet, l'invention a pour objet un dispositif de surveillance de l'allure notamment d'un cheval, du type comportant une première unité portée par le cheval et comportant des moyens de mesure de paramètres de déplacement du cheval suivant au moins un axe pour délivrer des signaux représentatifs de ceux-ci, des moyens autonomes d'alimentation en énergie électrique des circuits de cette première unité et des moyens d'émission d'informations vers des moyens de réception de ces informations prévus dans une seconde unité séparée de la première, caractérisé en ce qu'il comporte en outre des moyens de traitement des signaux représentatifs des paramètres de déplacement du cheval et des moyens de comparaison de l'amplitude de ces signaux à au moins une valeur déterminée caractérisant une allure donnée du cheval, à savoir le trot ou le galop, pour déterminer en temps réel si le cheval est au trot ou au galop et en ce que la seconde unité comporte des moyens d'indication de l'allure du cheval, à savoir le trot ou le galop, pour indiquer en temps réel une faute d'allure de celui-ci.

Avantageusement, les moyens de traitement comprennent des premiers moyens de sélection de signaux dans une première gamme de fréquence des paramètres issus des moyens de mesure pour déterminer un changement d'allure du cheval.

Avantageusement également, ledit axe est un axe vertical et la première gamme de fréquence s'étend de 1,5 à 2,5 Hz.

Selon un autre aspect,l'invention a également pour objet un système de surveillance de chevaux lors d'une course, caractérisé en ce que l'allure de chaque cheval est surveillée au moyen d'un dispositif tel que décrit précédemment, chacun des dispositifs émettant sur une fréquence distincte.

Avantageusement, les secondes unités de chacun des dispositifs sont regroupées en une unité commune comportant des moyens de balayage des différentes fréquences et des moyens d'indication de faute pour chaque cheval.

Ainsi, par analyse des signaux électriques fournis par les moyens de mesure placés par exemple sur le dos de chaque cheval, le dispositif selon l'invention permet la surveillance par des commissaires de course, de l'allure de chaque cheval, par exemple lors d'une course de trot.

De plus, ce système permet le suivi en temps réel, par exemple par visualisation optique sur console, d'un changement d'allure et l'enregistrement du déroulement de la course pour chaque cheval.

L'invention sera mieux comprise à l'aide de la description qui va suivre, donnée uniquement à titre d'exemple et faite en se référant aux dessins annexés, sur lesquels :
- la Fig. 1 représente un schéma synoptique d'un dispositif de surveillance d'allure selon l'invention; et
- la Fig. 2 représente un organigramme illustrant le fonctionnement d'un dispositif de surveillance selon l'invention.

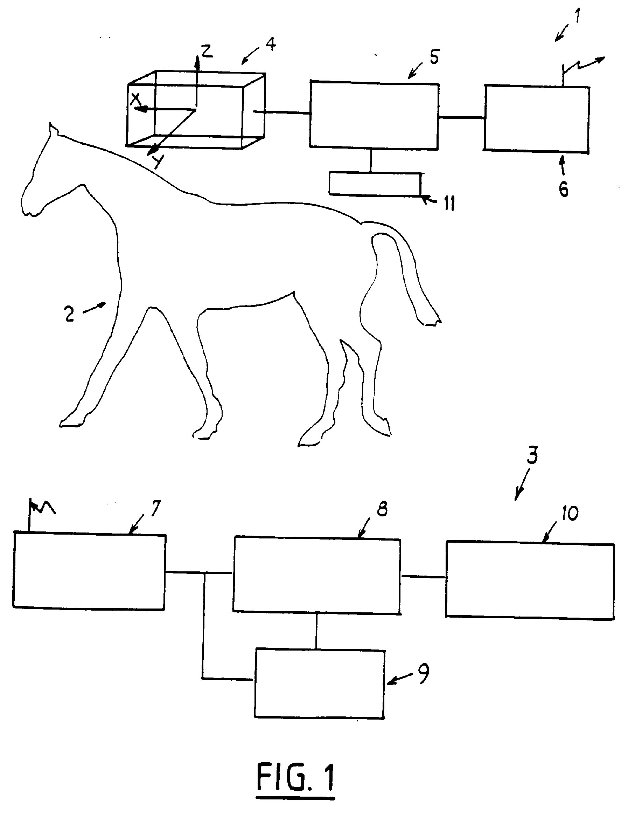

Ainsi qu'on peut le voir sur la Fig. 1, un dispositif de surveillance de l'allure notamment d'un cheval, selon l'invention, comporte une première unité 1 portée par un cheval 2 et une seconde unité 3 séparée de la première et disposée par exemple dans un local à proximité d'un champ de course ou embarquée à bord d'un véhicule automobile suivant celle-ci.

La première unité comporte des moyens de mesure 4 de paramètres de déplacement du cheval suivant au moins un axe.

Ces moyens de mesure peuvent être constitués par exemple par des accéléromètres, des gyroscopes ou d'autres moyens de mesure, permettant de transformer des mouvements du cheval en signaux électriques. Ces moyens permettent de mesurer les déplacements du cheval suivant au moins un axe, par exemple l'axe vertical Z, mais peuvent également indiquer les déplacements du cheval suivant les trois axes d'un repère orthonormé X, Y, Z.

La sortie de ces moyens de mesure est reliée à l'entrée de moyens de traitement d'informations 5 qui seront décrits plus en détail par la suite et dont la sortie est reliée à des moyens d'émission 6 d'informations vers des moyens 7 de réception de ces informations disposés dans la seconde unité 3.

La sortie de ces moyens de réception d'informations est reliée d'un part à des moyens de traitement 8 des signaux issus de ces moyens, qui seront décrits plus en détail par la suite, et d'autre part à des moyens d'enregistrement 9 de ces informations.

La sortie des moyens de traitement des signaux 8 est reliée à des moyens 10 d'indication de faute, par exemple mis à la disposition de commissaires de course.

Ainsi qu'il a été mentionné précédemment, la première unité 1 peut être portée par le cheval,l'alimentation électrique de cette unité, nécessaire au fonctionnement des différents composants de celle-ci étant fournie par des moyens d'alimentation autonomes 11 constitués par exemple par des piles, des accumulateurs, des capteurs d'énergie solaire ou autres.

Les moyens de traitement d'informations 5 ou 8 prévus respectivement dans la première et la seconde unités 1 et 3, peuvent comprendre des moyens de sélection de signaux dans une première gamme de fréquence des paramètres issus des moyens de mesure pour déterminer un changement d'allure du cheval.

En effet, suivant le cas, ces moyens de sélection peuvent être disposés soit dans les moyens de traitement 5 de l'unité 1, soit dans les moyens de traitement 8 de l'unité 3.

Avantageusement, la première gamme de fréquence s'étend de 1,5 à 2,5 Hz.

Ces moyens de traitement 5 et 8 peuvent également comprendre des seconds moyens de sélection de signaux dans une seconde bande de fréquence, double de la première, c'est à dire s'étendant de 3 à 5 Hz.

En effet, la Demanderesse a constaté que lors d'un changement d'allure d'un cheval par exemple lors du passage du trot au galop, l'amplitude des mouvements de celui-ci dans une bande de fréquence comprise entre 1,5 et 2,5 Hz passe par exemple d'un niveau 1 à un niveau 6 à 7 pour des mouvements suivant l'axe Z du cheval.

Lors de ce changement d'allure, l'amplitude des excitations pour l'octave, c'est à dire pour la bande de fréquence comprise entre 3 et 5 Hz, est divisée par deux ou trois.

Il est alors possible en prélevant l'une ou l'autre de ces informations ou en combinant ces deux informations de déterminer si le cheval est au galop ou au trot.

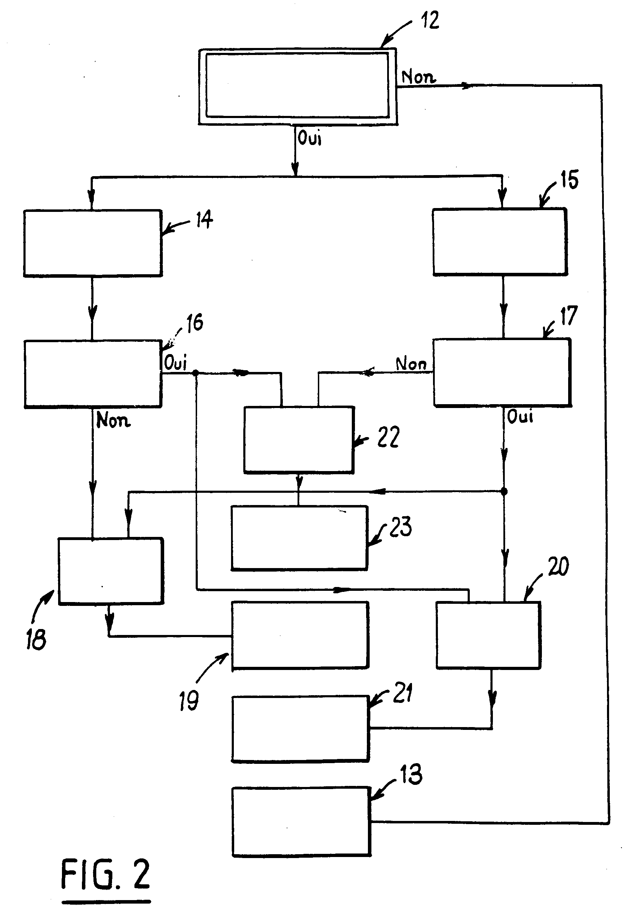

Cette détermination est réalisée par exemple par l'intermédiaire d'un microprocesseur associé aux moyens de traitement 8 de signal prévus dans la seconde unité 3, ce microprocesseur fonctionnant suivant l'organigramme représenté sur la Fig.2.

La première phase de fonctionnement de celui-ci est une phase de validation 12 d'un signal reçu par exemple par l'intermédiaire d'un système de levée de doute assurant par exemple une comparaison de deux réceptions successives de signaux émanant de mêmes moyens d'émission.

En cas de non validation du signal reçu, un défaut de transmission est déterminé en 13 et signalé par exemple aux commissaires de course.

En cas de validation du signal reçu, celui-ci est ensuite transmis aux entrées de deux filtres passe-bande respectivement 14 et 15 dont les bandes passantes restituent l'énergie dans la bande de fréquence significative lors du passage du cheval au galop pour le filtre d'ordre 1,14, et de bande passante s'étendant entre 1,5 et 2,5 Hz et dans la bande de fréquence significative lorsque le cheval est au trot pour le filtre d'ordre 2,15, et de bande passante s'étendant entre 3 et 5 Hz.

Les signaux issus de ces filtres 14 et 15 sont ensuite respectivement appliqués à des moyens de comparaison 16 et 17. Ces signaux sont ainsi comparés à des valeurs caractérisant le galop et le trot du cheval. Ces valeurs sont déterminées comme mentionné précédemment, à savoir que l'amplitude des mouvements du cheval dans une bande de fréquence comprise entre 1,5 et 2,5 Hz passe d'un niveau 1 à un niveau 6 à 7, lors du passage au galop d'un cheval, pour le mouvement suivant l'axe Z de celui-ci, tandis que l'amplitude des excitations pour l'octave, c'est à dire pour la bande de fréquence s'étendant entre 3 et 5 Hz, est divisée par 2 ou 3.

En 18, a lieu une phase intermédiaire pour savoir si la comparaison en 16 est négative et si la comparaison en 17 est positive.

Si c'est le cas, le cheval est bien au trot et une indication correspondante est donnée en 19 aux commissaires de course.

Par contre, en 20, si les résultats des comparaisons effectuées en 16 et en 17 sont positifs tous les deux, une indication d'allure douteuse est donnée aux commissaires en 21.

En 22, est prévue une étape intermédiaire permettant de déterminer que si la réponse à la comparaison en 16 est positive et si la réponse à la comparaison en 17 est négative, le cheval est à la faute, cette faute étant indiquée aux commissaires de course en 23.

Ainsi, le signal validé reçu par la seconde unité 3 est filtré par les deux filtres passe-bande 14 et 15 de bande passante s'étendant respectivement de 1,5 à 2,5 Hz et de 3 à 5 Hz, le premier filtre restituant l'énergie dans la bande de fréquence significative lors du passage au galop du cheval et le second, la fréquence significative au trot. L'amplitude des signaux dans chaque bande de fréquence est alors comparée à un gabarit correspondant, pour l'ordre 1 c'est à dire pour le filtre 14, à l'énergie normale pour un cheval au galop et pour l'ordre 2 c'est à dire pour le filtre 15, à l'énergie correspondant normalement au trot.

Les comparateurs 16 et 17 indiquent ainsi en temps réel l'état de l'énergie dans chaque bande de fréquence par rapport à un gabarit.

L'énergie dans chaque bande de fréquence est ensuite comparée à un gabarit caractérisant une allure déterminée, les résultats de ces comparaisons ou leur combinaison permettant de déterminer l'allure du cheval.

Avant le départ de chaque épreuve, les différents concurrents reçoivent un boîtier comportant la première unité 1, ce boîtier étant fixé par exemple au niveau du garrot du cheval au harnachement de celui-ci.

A chaque cheval et donc plus particulièrement à chaque unité affectée à un cheval est ensuite attribué un canal de communication déterminé, de manière que les différentes unités portées par les différents chevaux émettent à des fréquences différentes. L'allure de chaque cheval est ainsi surveillée au moyen d'un dispositif tel qu'il vient d'être décrit, ce dispositif émettant sur une fréquence déterminée affectée à un cheval.

Dans ce système de surveillance, les secondes unités associées aux premières unités portées par les chevaux peuvent être regroupées dans une unité commune, comportant des moyens de balayage des différentes fréquences d'émission des premières unités portées par les chevaux, ces moyens de balayage assurant une scrutation successive des différentes fréquences ou canaux d'émission d'informations pour réaliser une surveillance de tous les chevaux pendant la course.

Dans ce cas également, les moyens d'indication de faute comportent des moyens d'indication de faute pour chaque cheval, de sorte que les commissaires de course disposent de toutes les informations nécessaires à une prise de décision, afin de décider du déclassement ou non d'un cheval.

Il est à noter que les différentes transmissions d'informations peuvent être enregistrées dans les moyens d'enregistrement 9, ce qui permet, en cas de litige, d'opérer une vérification.

Bien que dans le mode de réalisation décrit, on ait représenté un dispositif de surveillance de l'allure d'un cheval et plus particulièrement de surveillance du passage au galop d'un cheval courant normalement au trot, d'autres applications peuvent être envisagées.

Ainsi par exemple, les informations concernant les autres axes de déplacement peuvent être utilisées pour déterminer par exemple, si le cheval fait un écart.

Par ailleurs, ce dispositif peut également être utilisé pour la surveillance de courses autres que de chevaux.

## Revendications

1. Dispositif de surveillance de l'allure notamment d'un cheval, du type comportant une première unité (1) portée par le cheval (2) et comportant des moyens (4) de mesure de paramètres de déplacement du cheval suivant au moins un axe (Z) pour délivrer des signaux représentatifs de ceux-ci, des moyens (11) autonomes d'alimentation en énergie électrique des circuits de cette première unité et des moyens (6) d'émission d'informations vers des moyens (7) de réception de ces informations prévus dans une seconde unité (3) séparée de la première, caractérisé en ce qu'il comporte en outre des moyens (5,8) de traitement des signaux représentatifs des paramètres de déplacement du cheval et des moyens de comparaison (16,17) de l'amplitude de ces signaux à au moins une valeur déterminée caractérisant une allure donnée du cheval, à savoir le trot ou le galop, pour déterminer en temps réel si le cheval est au trot ou au galop et en ce que la seconde unité (3) comporte des moyens d'indication (10) de l'allure du cheval, à savoir le trot ou le galop, pour indiquer en temps réel une faute d'allure de celui-ci.

2. Dispositif selon la revendication 1, caractérisé en ce que les moyens de traitement (5,8) comprennent des premiers moyens (14) de sélection de signaux dans une première gamme de fréquence des paramètres issus des moyens de mesure pour déterminer une changement d'allure du cheval.

3. Dispositif selon la revendication 1 ou 2, caractérisé en ce que ledit axe est un axe vertical (2).

4. Dispositif selon la revendication 2 ou 3, caractérisé en ce que la gamme de fréquence s'étend de 1,5 à 2,5 Hz.

5. Dispositif selon l'une quelconque des revendications 2 à 4, caractérisé en ce que les moyens de traitement (5,8) comprennent des seconds moyens (15) de sélection de signaux dans une bande de fréquence double de la première, des paramètres de déplacement du cheval.

6. Dispositif selon la revendication 5, caractérisé en ce que les signaux de sortie des premiers et seconds moyens de sélection (14,15) sont appliqués aux entrées des deux comparateurs (16,17) de ces signaux à des valeurs caractérisant respectivement le galop et le trot du cheval, les sorties de ces comparateurs étant ensuite traitées dans une unité de traitement d'informations pour déterminer une faute d'allure du cheval (23), une allure correcte de trot (19) ou une allure douteuse (21) de celui-ci en fonction du résultat des comparaisons.

7. Dispositif selon l'une quelconque des revendications précédentes, caractérisé en ce que les moyens de traitement sont disposés dans la première unité (1).

8. Dispositif selon l'une quelconque des revendications précédentes, caractérisé en ce que les moyens de comparaison (16,17) sont disposés dans la seconde unité (3).

9. Dispositif selon l'une quelconque des revendications précédentes, caractérisé en ce que la seconde unité (3) comporte des moyens d'enregistrement (9) des informations, reliés à la sortie des moyens de réception (7).

10. Système de surveillance de chevaux pendant une course de trot, caractérisé en ce que l'allure de chaque cheval est surveillée au moyen d'un dispositif selon l'une quelconque des revendications précédentes, chacun des dispositifs émettant ses informations sur une fréquence distincte.

11. Système selon la revendication 10, caractérisé en ce que les secondes unités de chacun des dispositifs sont regroupées en une unité commune comportant des moyens de balayage des différentes fréquences et des moyens d'indication de faute pour chaque cheval.

## Patentansprüche

1. Vorrichtung zur Überwachung der Gangart, insbesondere eines Pferdes, des Typs mit einer ersten Einheit (1), die von dem Pferd (2) getragen wird und eine Einrichtung (4) zum Messen von Parametern der Bewegung des Pferdes entlang mindestens einer Achse (Z) aufweist, um diese repräsentierende Signale auszugeben, einer unabhängigen Einrichtung (11) zur Versorgung von Schaltungen der ersten Einheit mit elektrischer Energie und einer Einrichtung (6) zum Senden von Informationen an eine Einrichtung (7) zum Empfangen von Informationen, die in einer von der ersten Einheit getrennten zweiten Einheit (3) vorgesehen ist, dadurch gekennzeichnet, daß sie ferner aufweist: Einrichtungen (5, 8) zur Verarbeitung der die Parameter der Bewegung des Pferdes repräsentierenden Signale, und Einrichtungen (16, 17) zum Vergleichen der Amplitude dieser Signale mit wenigstens einem vorbestimmten Wert, der eine gegebene Gangart des Pferdes, nämlich Trab oder Galopp, charakterisiert, um in Echtzeit festzustellen, ob das Pferd trabt oder galoppiert, und daß die zweite Einheit (3) Anzeigeeinrichtungen (10) für die Gangart des Pferdes, nämlich des Trabs oder des Galopps, aufweist, um in Echtzeit einen Gangartfehler des Pferdes anzuzeigen.

2. Vorrichtung nach Anspruch 1, dadurch gekennzeichnet, daß die Verarbeitungseinrichtungen (5, 8) eine erste Einrichtung (14) zum Auswählen von von der Meßeinrichtung ausgegebenen Parametersignalen aus einem ersten Frequenzbereich aufweist, um eine Änderung der Gangart des Pferdes zu ermitteln.

3. Vorrichtung nach Anspruch 1 oder 2, dadurch gekennzeichnet, daß die Achse eine vertikale Achse (2) ist.

4. Vorrichtung nach Anspruch 2 oder 3, dadurch gekennzeichnet, daß sich der Frequenzbereich von 1,5 bis 2,5 Hz erstreckt.

5. Vorrichtung nach einem der Ansprüche 2 bis 4, dadurch gekennzeichnet, daß die Verarbeitungseinrichtungen (5, 8) eine zweite Einrichtung (15) zum Auswählen von Signalen der Parameter der Bewegung des Pferdes aus einem Frequenzband aufweisen, das das Doppelte des ersten beträgt.

6. Vorrichtung nach Anspruch 5, dadurch gekennzeichnet, daß die Ausgangssignale der ersten und der zweiten Auswähleinrichtung (14, 15) an Eingänge der beiden Komparatoren (16, 17) angelegt werden, welche diese Signale mit Werten vergleichen, die jeweils den Trab und den Galopp des Pferdes charakterisieren, wobei die Ausgargssignale dieser Komparatoren anschließend in einer Datenverarbeitungseinheit verarbeitet werden, um in Abhängigkeit von den Vergleichsergebnissen einen Gangartfehler des Pferdes (23), einen korrekten Trab (19) oder eine zweifelhafte Gangart (21) des Pferdes au ermitteln.

7. Vorrichtung nach einem der vorhergehenden Ansprüche, dadurch gekennzeichnet, daß die Verarbeitungseinrichtungen in der ersten Einheit (1) angeordnet sind.

8. Vorrichtung nach einem der vorhergehenden Ansprüche, dadurch gekennzeichnet, daß die Vergleichseinrichtungen (16, 17) in der zweiten Einheit (3) angeordnet sind.

9. Vorrichtung nach einem der vorhergehenden Ansprüche, dadurch gekennzeichnet, daß die zweite Einheit (3) eine mit dem Ausgang der Empfangseinrichtung (7) verbundene Informationsaufzeichnungseinrichtung (9) aufweist.

10. System zur Überwachung von Pferden während eines Trabrennens, dadurch gekennzeichnet, daß die Gangart jedes Pferdes durch eine Vorrichtung nach einem der vorhergehenden Ansprüche überwacht wird, wobei jede der Vorrichtungen ihre Daten auf einer verschiedenen Frequenz sendet.

11. System nach Anspruch 10, dadurch gekennzeichnet, daß die zweiten Einheiten jeder Vorrichtung zu einer gemeinsamen Einheit umgruppiert werden, die Einrichtungen zum Abtasten verschiedener Frequenzen und Fehleranzeigeeinrichtungen für jedes Pferd aufweist.

## Claims

1. Device for monitoring the gait particularly of a horse, of the type comprising a first unit (1) carried by the horse (2) and including means (4) for measuring movement parameters of the horse along at least one axis (2) for delivering the signals representing these, self-contained means (11) for supplying electric power to the circuits in this first unit and means (6) for transmitting data to the means (7) for receiving this data provided in a second unit (3) separated from the first, characterised in that it also includes means (5, 8) for processing the signals representing the movement parameters of the horse and means (16, 17) for comparing the amplitude of the signals with at least one given value characterising a given gait of the horse, namely trotting or galloping, in order to determine in real time whether the horse is trotting or galloping, and in that the second unit (3) includes means (10) for indicating the gait of the horse, namely trotting or galloping, in order to indicate in real time any faulty gait of the horse.

2. Device according to Claim 1, characterised in that the processing means (5, 8) comprise first means (14) for selecting signals in a first frequency range of the parameters originating from the measuring means in order to determine a change of gait of the horse.

3. Device according to Claim 1 or 2, characterised in that the said axis is a vertical axis (2).

4. Device according to Claim 2 or 3, characterised in that the frequency range extends from 1.5 to 2.5 Hz.

5. Device according to any one of Claims 2 to 4, characterised in that the processing means (5, 8) comprise second means (15) for selecting signals in a frequency band, double the first, of the parameters of movement of the horse.

6. Device according to Claim 5, characterised in that the output signals from the first and second selection means (14, 15) are applied to the inputs of two comparators (16, 17) for comparing these signals at values characterising respectively galloping and trotting of the horse, the outputs from these comparators then being processed in a data processing unit for determining any faulty gait of the horse (23), a correct trotting gait (19) or a doubtful gait (21) of the horse according to the results of the comparisons.

7. Device according to any one of the preceding claims, characterised in that the processing means are disposed in the first unit (1).

8. Device according to any one of the preceding claims, characterised in that the comparison means (16, 17) are disposed in the second unit (3).

9. Device according to any one of the preceding claims, characterised in that the second unit (3) includes means (9) for recording the data, connected to the output of the receiving means (7).

10. System for monitoring horses during a trotting race, characterised in that the gait of each horse is monitored by means of a device according to any one of the preceding claims, each of the devices transmitting data over a separate frequency.

11. System according to Claim 10, characterised in that the second units of each of the devices are grouped in a common unit including means for scanning the different frequencies and means for indicating a fault for each horse.
